# EUROPEAN PATENT APPLICATION

(11) **EP 4 840 828 A1**
(43) Date of publication of application: **18.11.2026**
(21) Application number: 25305688.1
(22) Date of filing: 14.05.2025
(51) Int. Cl.: C02F 1/56, C02F 11/148, C02F 11/04, C02F 11/125, C02F 103/20, C02F 103/22, C02F 103/26, C02F 11/123, C02F 11/127

(54) **TREATMENT OF A DIGESTATE OF METHANISATION WITH A SUSPENSION OF WATER-SOLUBLE POLYMER**

(71) Applicant: SNF SA, 42160 Andrezieux-Bouthéon (FR)
(72) Inventor: Duchadeau, Aurélien, 42160 ANDRÉZIEUX-BOUTHÉON (FR); Tavernier, Bruno, 42160 ANDRÉZIEUX-BOUTHÉON (FR)
(74) Representative: Plasseraud IP

(57) **Abstract**

The present invention relates to a method for dewatering a methanisation digestate **MD** having a solids content higher than 75 g.L⁻¹, comprising more than 25 g.L⁻¹ of fibrous matter, and having a conductivity higher than 10 000 µS/cm. The method implements at least one suspension **PS** of at least one water-soluble polymer **P.**

## Description

### Field of the invention

The present invention concerns a method for the dewatering of a digestate of methanisation of an industrial or domestic waste, with high solids content (>75 g.L⁻¹), comprising more than 25 g.L⁻¹ of fibrous matter and with high conductivity (> 10 000 gS.cm⁻¹). More specifically, a suspension of water-soluble polymer particles is added in the digestate before dewatering step (liquid-solid separation).

### Background of the invention

The digestate of methanisation process of an industrial or domestic waste is directly dewatered by a press (screw press), without use of a dewatering agent (such as a flocculant), to recover an aqueous effluent free of fibrous matter and with a remaining high solid content (> 50 g.L⁻¹) and with high conductivity (> 10 000 gS.cm⁻¹).

Various methods have been described for dewatering effluents with a high solids content.

In the international patent application WO2023/170328 from QUÍMICA TÉCNICA ECOLOGICA and BEDA WATER ENGINEERING, the solution presented consists of a solvent evaporation process to concentrate the solids, this method being very energy intensive.

In the Chinese patent application CN 114249519 from BEIJING DRAINAGE GROUP proposes a two-stage sludge conditioning process: 1) contacting the sludge with an aqueous solution containing less than 10 weight % of flocculants, 2) contacting the aggregates formed with an inorganic conditioning agent prior to dewatering on a tray filter. The use of two different compounds is necessary here for sludge conditioning, and the amount of water added during the first conditioning stage with the polymer solution is significant.

Because of the drawbacks described, these methods cannot be used for dewatering a digestate of methanisation process.

Moreover, flocculants in inverse emulsion form (water in oil emulsion) are not adapted for for dewatering of methanisation digestate because their inversion in the digestate would be difficult due to the presence of fibrous matter.

Flocculants in powder form are interesting because of their high polymer content (more than 90 weight %) but they need to be dissolved in aqueous solutions which require dissolution units which are onerous and energy intensive, to finally obtain diluted aqueous polymer solutions.

To recover an aqueous effluent free of fibrous matter and to decrease its high solid content, there's a need for a method for dewatering a methanisation digestate using a concentrated dewatering aid which doesn't require use of water for its dissolution before dewatering.

### Description of the invention

The present invention describes a method for dewatering a methanisation digestate of an domestic or industrial waste, with high solids content (>75 g.L⁻¹), containing more than 25 g.L⁻¹ of fibrous matter and with high conductivity (>10 000 µS/cm). The method involves treating the digestate with a water-soluble polymer, with an average molecular weight over 1 million Daltons, in suspension, this suspension containing more than 10 % by weight of polymer, and treating the resultant effluent by a solid/liquid separation.

This method minimizes water use and recovers an aqueous effluent free of fibrous matter and with a low solid content (< 25g.L⁻¹). This effluent could be used directly, without further liquid/solid separation, for other applications such as agricultural irrigation.

More precisely, the invention concerns a method for dewatering a methanisation digestate **MD** having a solids content higher than 75 g.L⁻¹, comprising more than 25 g.L⁻¹ of fibrous matter, and having a conductivity higher than 10 000 µS/cm, the said method comprising at least the following successive steps:
(a) adding to the methanisation digestate **MD** at least one suspension **PS** of at least one water-soluble polymer **P,** said suspension **PS** containing at least 10 % by weight of polymer **P;**
(b) stirring the aqueous treated effluent obtained in step a) to obtain a suspension **S;**
(c) performing a liquid/solid separation of the **S** suspension to obtain an aqueous solution **L** free of fibrous matter.

The methanisation digestate is the substrate obtained after anaerobic digestion of domestic or industrial waste. Fibrous matter comprises advantageously vegetable fibers not completely decomposed after anaerobic digestion in the methanisation process.

Industrial or domestic waste for methanisation comprises:
- farm waste: pig or cattle slurry, pig or cattle manure, poultry droppings, residues from corn and other cereal crops etc.
- local authority waste: lawn mowings, cuttings from roadside verges, biowaste from catering etc.
- agribusiness waste: animal or vegetable fats, fruit, vegetables etc.
- domestic waste: sorted biowaste
- intermediate energy crops

By "polymer" we mean a homopolymer prepared from one type of monomer, or a copolymer prepared from at least two different types of monomers.

The polymers **P** used in the process of the invention have (independently of each other) each a molecular weight greater than 1 million Daltons, more preferably between 1 and 40 million Daltons, even more preferably between 1 and 30 million Daltons, even more preferably between 2 and 20 million Daltons, and even more preferably between 3 and 10 million Daltons. Molecular weight is defined as weight average molecular weight. Molecular weight is determined by the intrinsic viscosity of the polymer. Intrinsic viscosity can be measured by methods known to those skilled in the art and can be calculated from reduced viscosity values for different polymer concentrations by a graphical method consisting of plotting reduced viscosity values (y-axis) against concentration (x-axis) and extrapolating the curve to zero concentration. The intrinsic viscosity value is plotted on the y-axis or using the least-squares method. The molecular weight can then be determined by the Mark-Houwink equation:$\left[η\right] = K {M}^{α}$
[η] represents the intrinsic viscosity of the polymer as determined by the solution viscosity method.
K is an empirical constant.
M represents the molecular weight of the polymer.
α represents the Mark-Houwink coefficient.
K and α depend on the particular polymer-solvent system.

By "water-soluble polymer", we mean a polymer which gives an aqueous solution without insoluble particles when dissolved with stirring at 25°C and a concentration of 10 g.L⁻¹ in deionized water.

By "hydrophilic monomer" is meant a monomer which has its coefficient, log(Kow), less than or equal to 1, wherein Kow is the octanol/water partition and is determined at 25°C in an octanol/water mixture having a volume ratio of 1/1, at a pH of between 6 and 8.

The octanol-water partition coefficient, Kow, represents the ratio of concentrations (g/L) of a monomer between the octanol phase and the aqueous phase. It is defined as follows: ${K}_{ow} = \frac{{\left[monomer\right]}_{octanol}}{{\left[monomer\right]}_{eau}}$

In the entire specification, viscosities are measured with a Brookfield viscometer, at 25°C in aqueous solution.

In this specification, it is considered that the person skilled in the art is able to determine the Brookfield viscometer module and speed suitable according to the viscosity range to be measured. Indeed, this type of measurement is part of the general knowledge of the person skilled in the art.

"X and/or Y" should be understood to mean "X", or "Y", or "X and Y".

The invention also includes all possible combinations of the various embodiments disclosed, whether they are preferred embodiments or given by way of example. Furthermore, when ranges of values are indicated, the limit values are included in these ranges. The disclosure also includes all of the combinations between the limit values of these ranges of values. For example, the ranges of values "1-20, preferably 5-15" imply disclosure of the ranges "1-5", "1-15", "5-20" and "15-20" and the values 1, 5, 15 and 20. All the particular and/or preferred embodiments described in the invention are combinable, provided they are not incompatible.

Polymers **P** comprises hydrophilic non-ionic monomers and/or anionic monomers and/or cationic monomers.
- The hydrophilic nonionic monomers are selected from the group consisting of: acrylamide, methacrylamide, N-alkylacrylamides, N-alkylmethacrylamides, N,N-dialkyl acrylamides (e.g. N,N-dimethylacrylamide or N,N-diethylacrylamide), N,N-dialkylmethacrylamides, alkoxylated esters of acrylic acid, alkoxylated esters of methacrylic acid, N-vinylpyrrolidone, N-methylol(meth)acrylamide, N-vinyl caprolactam, N-vinylformamide (NVF), N-vinyl acetamide, N-vinyl imidazole, N-vinyl succinimide, acryloyl morpholine (ACMO), glycidyl methacrylate, glyceryl methacrylate, diacetone acrylamide, anyhydride methacrylic, acrylonitrile, anydride maleic, itaconamide, vinylpyridine, hydroxyalkyl (meth)acrylate, thioalkyl (meth)acrylate, isoprenol, alkoxylated derivatives of isoprenol, hydroxyethyl(meth)acrylates, alkoxylated derivatives of hydroxyethyl(meth)acrylates, hydroxypropylacrylate, alkoxylated derivatives of hydroxypropylacrylate, vinyl acetate, and mixtures thereof, the alkyl groups being C1-C3 hydrocarbon chains.
- The hydrophilic anionic monomers are selected from the group consisting of acrylic acid, methacrylic acid, dimethylacrylic acid, itaconic acid, C1-C3 itaconic acid hemiesters, crotonic acid, maleic acid, fumaric acid, allylsulfonic acid, methallylsulfonic acid, 2-methylidenepropane-1,3-disulfonic acid, styrene sulfonic acid, 2-acrylamido-2-5 methylpropane sulfonic acid (ATBS), 2-acrylamido-2-methylpropane disulfonic acid, 3-allyloxy-2-hydroxypropane sulfonic acid, the salts thereof and mixtures thereof.
- The hydrophilic cationic monomers are selected from the group consisting of diallyldialkyl ammonium salts, such as diallyl dimethyl ammonium chloride (DADMAC); acidified or quaternized salts of dialkylaminoalkylacrylamides; acidified or quaternized salts of dialkyl-aminoalkylmethacrylamides, e.g. methacrylamido-propyl trimethyl ammonium chloride (MAPTAC), acrylamido-propyl trimethyl ammonium chloride (APTAC), acidified or quaternized salts of dialkylaminoalkyl acrylate, such as quaternized or salified dimethylaminoethyl acrylate (ADAME), acidified or quaternized salts of dialkylaminoalkyl methacrylate, such as quaternized or salified dimethylaminoethyl methacrylate (MADAME), and mixtures thereof. Alkyl groups are C₁-C₃.

Water-soluble salts of hydrophilic anionic monomers are advantageously alkali metal (preferably sodium or potassium) or alkaline earth metal (preferably calcium or magnesium) or ammonium (preferably NH₄⁺) salts.

Optionally, the water-soluble polymer **P** contains hydrophilic zwitterionic monomers which have the particularity of having at least one anionic charge and at least one cationic charge on the same monomer unit. The cationic group is generally a quaternary ammonium. The anionic group is generally a salified form of a carboxylic acid, a sulfonic acid, a phosphoric acid or a phosphonic acid. A preferred zwitterionic monomer is 2-(3-((2-(acryloyloxy) ethyl) dimethylammonio) propanamido)-2-methylpropane-1-sulfonate.

Preferably, the polymer **P** comprises hydrophilic non-ionic monomers and hydrophilic cationic monomers.

Hydrophilic cationic monomer content in the polymer **P** is preferably between 1 mol% and 100 mol%, and more preferably between 5 and 90 mol%.

More preferably, the polymer **P** is a copolymer of (meth)acrylamide and meth)acrylamido-propyl trimethyl ammonium chloride ((M)APTAC).

Polymer **P** consists of hydrophilic monomer(s) and may comprise structuring agent(s). According to the invention, polymers **P** may have a linear, branched, star-shaped or comb-shaped structure. This structure can be obtained, according to the general knowledge of a person skilled in the art, for example by selecting the initiator, the transfer agent, the polymerization technique such as Reversible Addition Fragmentation chain Transfer (RAFT) polymerization, Nitroxide Mediated Polymerization (NMP) or Atom Transfer Radical Polymerization (ATRP), the incorporation of structuring compounds, or the concentration.

Polymers **P** may be structured by a structuring agent. By structured polymer is meant a non-linear polymer, for instance branched, star-shaped or comb-shaped structure. The structuring agent is advantageously chosen from:
- compounds chosen from polyethylenically unsaturated compounds (having, as a minimum, two unsaturated functions) different from the monomers previously described, like for example, vinyl functions, in particular, allylic or acrylic, and, for example, methylene bis acrylamide (MBA), triallylamine, tetraallylammonium chloride or 1,2 dihydroxyethylene bis-(N-acrylamide),
- compounds having at least two epoxy functions,
- compounds having at least one unsaturated function and an epoxy function,
- macro-initiators such as polyperoxides, polyazoics and transfer polyagents, such as polymercaptan polymers, and polyols,
- functionalized polysaccharides,
- water-soluble metal complexes composed:
   * of a metal of valence greater than 3 such as, as an example and in a non-limiting manner, aluminium, boron, zirconium, or also titanium, and
   * of a ligand carrying a hydroxyl function.

The quantity of structuring agent in the polymer **P** is advantageously less than 1 000 ppm by weight relative to the total weight of the monomers of the polymer **P,** preferably less than 100 ppm by weight, and more preferably less than 10 ppm by weight.

Polymer **P** is water soluble and if it comprises at least one structuring agent, it remains water soluble. A person skilled in the art knows how to adjust the quantity of structuring agent and, possibly, the quantity of transfer agent needed to obtain this result.

Preferably, the polymer **P** is linear.

Suspension **PS** contains at least 10 % by weight of polymer **P,** preferably between 10 % and 60 % by weight of polymer **P,** more preferably between 15% and 50 % by weight of polymer **P.**

The particles of polymer **P** in the suspension **PS** have preferably an average diameter ranging from 0.1 to 300 µm. The average particle diameter can be determined by any method known to the skilled person of the art, such as binocular microscopy.

Advantageously, the suspension **PS** comprises (a) particles of at least one water-soluble polymer **P,** (b) at least one compound selected from a mineral salt, an organic salt, an organic dispersing polymer and mixtures thereof, and (c) water.
- Mineral or organic salts comprising at least one anion selected from among sulfates, dihydrogen phosphates, phosphates, halides;
- Mineral or organic salts comprising at least one cation selected from among sodium, potassium, ammonium, magnesium, calcium, aluminium;
- Mixtures of at least two of these salts;
- Organic dispersing polymers selected from among polymers or copolymers of acrylic acid, 2-acrylamido-2-methylpropane sulfonic acid and the salts thereof, and of acrylamide having a molecular weight ranging from 1000 to 30 000 g·mol⁻¹.

Preferably, the suspension **PS** as compound (b) comprises from 8 to 27 weight % of mineral salt or organic salt and from 5 to 20 dry weight % of organic dispersing polymer.

The suspension **PS** may also comprise at least one additive selected from among polyfunctional alcohols e.g. glycerol, polyalkylene glycols such as polyethylene glycol and polypropylene glycol. Advantageously, the additive is contained in a weight amount of the dispersion ranging from 0.001 to 20 weight %, preferably from 0.5 to 10 weight %.

In another embodiment, the suspension **PS** is an anhydrous oily suspension of particles of at least one water-soluble polymer **P.** Polymer **P** is in the form of an anhydrous oily suspension, generally obtained by suspending particles of polymer P in an oil. The anhydrous character is guaranteed by not adding water.

The oil of the anhydrous oily suspension of polymer **P** is selected from mineral oils (containing saturated hydrocarbons such as paraffins, isoparaffins or cycloparaffins) and/or synthetic oils. The oil can advantageously represent 40 to 80% by weight of the anhydrous oily suspension, for example 45 to 70 % by weight.

Even more preferentially, the anhydrous oily suspension of polymer **P** may contain a rheology modifying agent and/or an emulsifying agent and/or a inverting agent. In this case, the percentage by weight of oil (advantageously 40 to 80%) is adjusted to reach 100.

Preferably, the rheology modifier is selected from hydroxyethylcellulose, attapulgite, laponite, hectorite, montmorillonite, bentonite, fumed silicas and mixtures thereof

The anhydrous oily suspension of polymer **P** advantageously contains between 0.05 and 5.00% by weight of rheology modifier, more advantageously between 0.05 and 1.5%, even more advantageously between 0.1 and 1.0% by weight (relative to the weight of the anhydrous oily suspension.

The emulsifying agent is advantageously selected from sorbitan esters, polyethoxylated sorbitan esters, diethoxylated oleocetyl alcohol, polyesters having an average molecular weight of between 1000 and 3000 Dalton resulting from the condensation between a poly(isobutenyl) succinic acid or its anhydride and a polyethylene glycol, black copolymers with an average molecular weight of between 2500 and 3500 Dalton resulting from the condensation between hydroxystearic acid and a polyethylene glycol, ethoxylated fatty amines, derivatives of di-alkanol amides, copolymers stearyl methacrylate, and mixtures thereof.

The anhydrous oily suspension of polymer **P** advantageously contains between 0.5 and 5.0% by weight of emulsifying agent, more advantageously between 1.0 and 2.0% by weight (relative to the weight of the anhydrous oily suspension).

The inverting agent is advantageously chosen from ethoxylated nonylphenols, preferably having 4 to 10 ethoxylations; ethoxy and propoxylated alcohols preferably having an ethoxy/propoxylation comprising between 12 and 25 carbon atoms; ethoxylated tridecyl alcohols; ethoxy/ propoxylated fatty alcohols ethoxylated sorbitan esters (advantageously 20 molar equivalents of ethylene oxide); poly- ethoxylated sorbitan laurate (advantageously 20 molar equivalents of ethylene oxide); polyethoxylated castor oil (advantageously 40 molar equivalents of ethylene oxide); decaethoxylated oleodecyl alcohol; heptaoxyethylated lauryl alcohol; polyethoxylated sorbitan monostearate (advantageously 20 molar equivalents of ethylene oxide); poly- ethoxylated alkyl phenols (advantageously 10 molar equivalents of ethylene oxide) cetyl ether polyethylene oxide alkyl aryl ether; N-ketyl-N-ethyl morpholinium etho- sulfate; sodium lauryl sulfate; condensation products of fatty alcohols with ethylene oxide (advantageously 10 molar equivalents of ethylene oxide); condensation products of alkylphenols and ethylene oxide (preferably 12 molar equivalents of ethylene oxide); condensation products of fatty amines with 5 or more molar equivalents of ethylene oxide; ethoxylated tristyrylphenols; condensates of ethylene oxide with polyhydric alcohols partially esterified with fatty chains as well as their anhydrous forms; amine oxides; alkyl polyglucosides; glucamide; phosphate esters; alkylbenzene sulfonic acids and their salts; water-soluble surfactant polymers and their mixtures.

Thus, the anhydrous oily suspension of polymer **P** may contain between 0.05 and 5.0% by weight of rheology modifier, between 0.5 and 5.0% by weight of emulsifying agent and between 0.1 and 4.0% by weight inverting agent

Addition of polymer **P** in the methanisation digestate **MD** (step a) of the method of the invention) is advantageously performed by injection of the suspension **PS** of polymer **P.**

Advantageously, for step a) of the method of the invention, between 5 and 50 kg.t⁻¹ of polymer **P** is added in digestate **MD,** with t= ton of solid particulates in digestate **MD.**

In another embodiment of the method of the invention, before or during step a) a water-soluble polymer **P'** with an average molecular weight between 20 000 and 1 million Dalton is added in the digestate **MD.**

The optional polymers **P'** used in the process of the invention preferably have a molecular weight between 200 000 and 500 000 Daltons. Molecular weight is defined as weight average molecular weight.

The polymer **P'** is advantageously selected from poly(aluminum chloride), the product of the polycondensation reaction between epichlorohydrin and dimethylamine, homopolymers or copolymers of diallyldimethyl ammonium halide.

More preferably, polymer **P'** is a polycondensation reaction between epichlorohydrin and dimethylamine.

Preferably, between 5 and 50 kg.t⁻¹ of Polymer **P'** is added in digestate **MD,** with t=ton of solid particles in effluent **MD.**

Preferably, between 5 and 50 kg.t⁻¹ of Polymer **P** is added in effluent **E,** with t=ton of solid particles in effluent **E.**

For sake of clarity, when digestate **MD** is first treated with a polymer **P',** said treated effluent **E** is the effluent that is secondly treated with polymer **P.** Polymers **P** and **P'** are preferably not added at the same time in the digestate **MD.**

In another embodiment, polymer **P'** is added at the time as polymer **P** in step a) of the method of the invention.

Additions of polymers **P** and **P'** in digestate **MD** are advantageously performed in-line. In other words, additions are performed in the pipe where digestate **MD** is circulating. Preferably, alimentation points in polymer **P'** is located before alimentation in polymer **P.**

Advantageously, stirring of digestate **MD** with polymer **P** (and **P')** is performed by a dynamic mixer added in the pipe where digestate **MD** is circulating, after alimentation points of polymer **P** (and **P').**

The best solution is a variable speed in-line dynamic mixer, allowing to fine-tune the mixing energy provided through the rotating impeller to obtain good floc formation without breaking them.

In the method of the invention, for step c) liquid solid separation means may be a filtration on a screw press or a belt filter press or with a centrifuge. Preferably, the liquid solid separation means is a filtration on a screw press.

Solids content can be determined by drying an effluent sample (100 mL at 105°C) until a constant mass is obtained. This mass is the solid content.

Conductivity is measured using a Hach HQ 14D hand-held conductivity meter with a measurement range of 0.01 µS.cm⁻¹ - 200 mS.cm⁻¹ with an accuracy of 0.5% in the 1 gS.cm⁻¹ - 200 mS.cm⁻¹ range.

Fibrous matter content is measured by determining the mass retained on the filter after filtration of the solution on a 200 micrometer mesh filter.

The liquid L obtained by step c) is free from fibrous matter. So, it contains no fibrous or has an insignificant quantity of solid particulates (less than 5 g.L⁻¹).

Chemical Oxygen Demand is the total amount of oxygen consumed by strong oxidants present in the effluent during the decomposition and chemical oxidation of organic/inorganic matter. A typical determination of the COD is to introduce an excess of the dichromate ion. After the reaction is completed the excess amount of dichromate is measured by titration with ferrous ammonium sulfate. COD is expressed in milligrams per liter (mg.L⁻¹), which indicates the mass of oxygen consumed per liter of solution.

The invention and its advantages will be better illustrated by the following non-limiting figure and examples.

### Figures

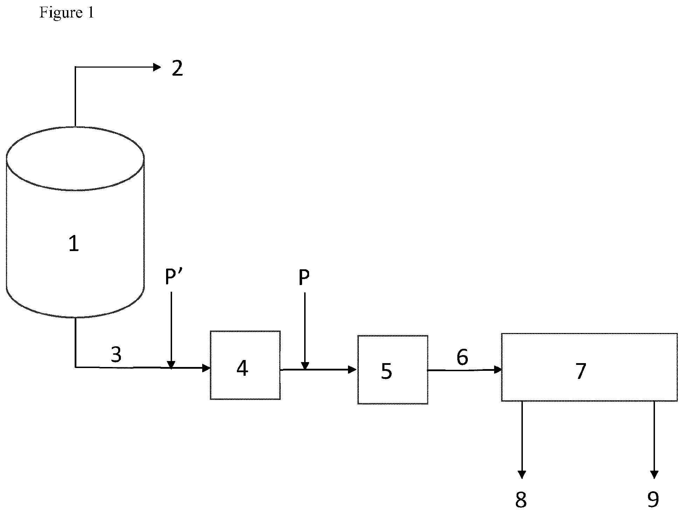

[Fig. 1] Figure 1 illustrates a methanization process (anaerobic digestion) of an agricultural waste indicating addition points for polymer **P** (and **P')** in the digestate **MD,** in which **1** represents an anaerobic digestion tank, **2** represents biogas flux, **3** represents a methanisation digestate **MD** flux, **4** and **5** represent mixing units, **6** represents a suspension **S, 7** represents a liquid/solid separation unit, **8** represents solid matter containing fibrous matter, **9** represents a liquid **L,** and **12** represents an aqueous solution **L**

### [Examples]

### Example 1: Dewatering of a digestate from anaerobic digestion of agricultural wastes using a water-soluble polymer in suspension S

Treated digestate has a conductivity of 20.2 mS.cm⁻¹ and a solid content of 78 g.L⁻¹ of which 35 g.L⁻¹ is fibrous matter.

Digestate is treated with polymers P1 or P2 in form of polymer suspensions (respectively PS1 and PS2) with polymer particles having an average diameter of 80 µm dispersed in oily continuous phase. P1 and P2 are water-soluble polymers with the same cationicity (1.2 meq.g⁻¹, 10 mol% of cationic monomer) but different compositions. P1 is a copolymer of acrylamide and dimethylaminoethyl acrylate quaternized with methyl chloride (ADAME-MC). P2 is a copolymer of acrylamide and acrylamido-propyl trimethyl ammonium chloride (APTAC). PS1 and PS2 suspensions contain respectively 30 % by weight of polymer P1 and P2. They were introduced to digestate either without dilution or after dilution with water to reach 1 % by weight of polymer in the resultant solution (aqueous solutions AS1 and AS2). 120 second mixing using a 4-blade agitator at 300 rpm was performed to allow floc formation. Then treated digestates were passed through a 60 mesh size screen under a pressure of 60 psi for 4 minutes to push out water (dewatering). Solid content was measured in aqueous effluent (filtrate).

Results are summarized in Table 1 below:

**[Table 1]**

| Suspension | Polymer | Polymer | Solid | Digestate | Remark |
|---|---|---|---|---|---|
| or aqueous solution (Polymer) | concentration (% by weight) | dosage (kg.t⁻¹) | content in filtrate (g.L⁻¹) | volume increase (% by weight) | |
| PS1 (P1) | 30 | 15 | 19.5 | 0,4 | Invention |
| AS1 (P1) | 1 | 14 | 18.7 | 10,1 | Comparative |
| PS2 (P2) | 30 | 7 | 19.5 | 0,2 | Invention |
| AS2 (P2) | 1 | 6 | 17.9 | 4,7 | Comparative |

With AS1 and AS2 polymer solutions, significant amount of water is put into the process, resulting in a digestate volume increase up to 10 % by weight. By switching to a polymer suspension (PS1 or PS2), this volume increase can be maintained below 1% by weight without significant degradation of performance of the separation step in terms of solid content un filtrate.

Moreover, polymer P2 (in PS2 or AS2) induces a decrease of polymer dosage by around 50 % with good performances (by comparison with results with polymer (P1 un AS1 or PS1).

### Example 2: Dewatering of a digestate from anaerobic digestion of agricultural wastes using a two steps flocculation (treatment with a polymer in aqueous solution, and with a second polymer in suspension)

Solid/liquid separation was performed on a digestate with a conductivity of 21.5 mS.cm⁻¹ and a solid content of 83 g.L⁻¹ among which 30 g.L⁻¹ of fibrous matter. Carbon Oxygen Demand is 38000 mg. L⁻¹.

In first step, digestate is optionally treated with an aqueous solution of polymer P' (containing 50 % by weight of polymer P') which is a product of a polycondensation reaction between epichlorohydrin and dimethylamine with average molecular weight of 400.000 Daltons. In that case, 60 seconds mixing using a 4-blade agitator at 300 rpm is applied to allow floc formation.

Afterwards, digestate is further treated with a polymer P3 in suspension PS3 with polymer particles having an average diameter of 0,8 µm dispersed in oily continuous phase. PS3 suspension contains 55 % by weight of polymer P. P3 is a copolymer of acrylamide and dimethylaminoethyl acrylate quaternized with methyl chloride (ADAME-MC) (cationicity 1.2 meq.g⁻¹). After addition of PS3 in digestate, 120 second mixing using a 4-blade agitator at 300 rpm was performed to allow floc formation, then treated digestate was passed through a 60 mesh size screen under a pressure of 60 psi for 4 minutes to push out water (dewatering).

Results are summarized in the table 2 below:

**[Table 2]**

| Polymer P' dosage (kg.t⁻¹) | Polymer P3 dosage (kg.t⁻¹) | Solid matter capture rate (%) | COD capture rate % | Digestate volume increase (w%) |
|---|---|---|---|---|
| 0 | 16.6 | 24,1 | 72 | 0,65 |
| 15.2 | 12.0 | 19.9 | 75 | 0.75 |
| 30.4 | 10.0 | 19.9 | 81 | 0.95 |

A previous treatment of the digestate with polymer P' (before treatment with PS3) allows to decrease solid content in the filtrate and to increase COD capture rate. Total polymer consumption is increased by this two step treatment but due to high polymer content of P' and PS3, digestate volume increase is kept below 1 % by weight.

## Claims

1. A method for dewatering a methanisation digestate **MD** having a solids content higher than 75 g.L⁻¹, comprising more than 25 g.L⁻¹ of fibrous matter, and having a conductivity higher than 10 000 µS/cm, the said method comprising at least the following successive steps:
(a) adding to the methanisation digestate **MD** at least one suspension **PS** of at least one water-soluble polymer **P,** said suspension **PS** containing at least 10 % by weight of polymer **P;**
(b) stirring the aqueous treated effluent obtained in step a) to obtain a suspension **S;**
(c) performing a liquid/solid separation of the **S** suspension to obtain an aqueous solution **L** free of fibrous matter.

2. A method for dewatering a methanisation digestate according to claim 1, wherein fibrous matter comprises vegetable fibers not completely decomposed after anaerobic digestion in the methanisation process.

3. A method for dewatering a methanisation digestate according to claims 1 to 2, wherein suspension **PS** contains between 10 % and 60 % by weight of polymer **P.**

4. A method for dewatering a methanisation digestate according to claims 1 to 3, wherein the polymer **P** has an average molecular weight between 3 and 10 million Dalton.

5. A method for dewatering a methanisation digestate according to claims 1 to 4, wherein, suspension **PS** comprises (a) particles of at least one hydrosoluble polymer **P,** (b) at least one compound selected from a mineral salt, an organic salt, a organic dispersing polymer and mixtures thereof, and (c) water.

6. A method for dewatering a methanisation digestate according to claims 1 to 5, wherein, suspension **PS** is an anhydrous oily suspension of particles of at least one hydrosoluble polymer **P.**

7. A method for dewatering a methanisation digestate according to claims 1 to 6, wherein polymer **P** comprises hydrophilic non-ionic and/or anionic and/or cationic monomers with:
- hydrophilic non-ionic monomers chosen in the list: acrylamide, methacrylamide, N-alkylacrylamides, N-alkylmethacrylamides, N,N-dialkyl acrylamides such as N,N-dimethylacrylamide or N,N-diethylacrylamide, N,N-dialkylmethacrylamides, alkoxylated esters of acrylic acid, alkoxylated esters of methacrylic acid, N-vinylpyrrolidone, N-methylol(meth)acrylamide, N-vinyl caprolactam, N-vinylformamide (NVF), N-vinyl acetamide, N-vinyl imidazole, N-vinyl succinimide, acryloyl morpholine (ACMO), glycidyl methacrylate, glyceryl methacrylate, diacetone acrylamide, anyhydride methacrylic, acrylonitrile, anydride maleic, itaconamide, vinylpyridine, hydroxyalkyl (meth)acrylate, thioalkyl (meth)acrylate, isoprenol, alkoxylated derivatives of isoprenol, hydroxyethyl(meth)acrylates, alkoxylated derivatives of hydroxyethyl(meth)acrylates, hydroxypropylacrylate, alkoxylated derivatives of hydroxypropylacrylate, vinyl acetate, and mixtures thereof, the alkyl groups being C1-C3 hydrocarbon chains;
- hydrophilic anionic monomers chosen in the list: acrylic acid, methacrylic acid, dimethylacrylic acid, itaconic acid, C1-C3 itaconic acid hemiesters, crotonic acid, maleic acid, fumaric acid,allylsulfonic acid, methallylsulfonic acid, 2-methylidenepropane-1,3-disulfonic acid, styrene sulfonic acid, 2-acrylamido-2-5 methylpropane sulfonic acid (ATBS), 2-acrylamido-2-methylpropane disulfonic acid, 3-allyloxy-2-hydroxypropane sulfonic acid, the salts thereof and mixtures thereof;
- hydrophilic cationic monomers chosen in the list: diallyldialkyl ammonium salts, such as diallyl dimethyl ammonium chloride (DADMAC); acidified or quaternized salts of dialkylaminoalkylacrylamides; acidified or quaternized salts of dialkyl-aminoalkylmethacrylamides, e.g. methacrylamido-propyl trimethyl ammonium chloride (MAPTAC), acrylamido-propyl trimethyl ammonium chloride (APTAC), acidified or quaternized salts of dialkylaminoalkyl acrylate, such as quaternized or salified dimethylaminoethyl acrylate (ADAME), acidified or quaternized salts of dialkylaminoalkyl methacrylate, such as quaternized or salified dimethylaminoethyl methacrylate (MADAME), and mixtures thereof. Alkyl groups are C1-C3.

8. A method for dewatering a methanisation digestate according to claims 1 to 7, wherein the polymer **P** comprises hydrophilic non-ionic monomers and hydrophilic cationic monomers.

9. A method for dewatering a methanisation digestate according to claims 8, wherein polymer **P** is a copolymer of (meth)acrylamide and (meth)acrylamido-propyl trimethyl ammonium chloride ((M)APTAC).

10. A method for dewatering a methanisation digestate according to claims 1 to 9, the particles of the suspension **PS** have an average diameter ranging from 0.1 to 300 µm,.

11. A method for dewatering a methanisation digestate according to claims 1 to 10, wherein the stirring in step c) is obtained by a dynamic mixer.

12. A method for dewatering a methanisation digestate according to claims 1 to 11, wherein the liquid/solid separation of step c) is realized by filtration on a screw press.

13. A method for dewatering a methanisation digestate according to claims 1 to 12, wherein between 5 and 50 kg.t⁻¹ of polymer **P** is added in the methanisation digestate **MD,** with t= ton of solid particulates in digestate **MD.**
